# FASCICULE DE BREVET EUROPEEN

(11) **EP 3 224 500 B1**
(45) Date de publication et mention de la délivrance du brevet: **09.01.2019**
(21) Numéro de dépôt: 15804875.1
(22) Date de dépôt: 03.11.2015
(51) Int. Cl.: F16H 25/22, A01G 3/037, F16H 25/20

(54) **MÉCANISME DE VIS ET ÉCROU À BILLES**
KUGELGEWINDETRIEB
BALL SCREW AND NUT MECHANISM

(30) Priorité: 25.11.2014 FR 1461401
(43) Date de publication de la demande: 04.10.2017
(73) Titulaire: PELLENC, 84120 Pertuis (FR)
(72) Inventeur: PELLENC, Roger, F-84120 Pertuis (FR); GILBERT, Philippe, F-13610 Le Puy Sainte Reparade (FR)
(74) Mandataire: Weber, Etienne Nicolas
(86) Numéro de dépôt international: PCT/FR2015/052961
(87) Numéro de publication internationale: WO 2016/083692

(56) Documents cités:
- FR-A1- 2 550 300
- FR-A1- 2 624 417
- GB-A- 879 462
- JP-A- 2012 225 485
- JP-A- 2014 156 902

## Description

### Domaine technique

La présente invention se rapporte à un mécanisme de vis-écrou à billes et en particulier à un tel mécanisme, de dimensions et de poids réduits, apte à être utilisé dans des outils électroportatifs, comme des sécateurs électriques ou des cisailles électriques, par exemple. L'invention peut aussi trouver des applications dans le domaine des machines-outils, le domaine aéronautique, celui des actionneurs, et plus généralement dans tout type dispositif mécanique requérant une transformation d'un mouvement de rotation en un mouvement de translation ou inversement.

### Etat de la technique antérieure

Les systèmes permettant de transformer un mouvement de rotation en mouvement de translation, ou un mouvement circulaire en mouvement linéaire, utilisent souvent des dispositifs de vis et écrou à billes, qui permettent de transformer le mouvement avec un très bon rendement. Ils sont généralement constitués d'une vis à filet hélicoïdal à profil circulaire ou gothique, d'un écrou incluant un filet muni du même type de profil, et de billes d'un diamètre calibré circulant dans un chemin de roulement constitué par la conjonction du filet de la vis et de celui de l'écrou, dans lequel les billes transmettent les efforts entre la vis et l'écrou, quasiment sans frottement.

Un des problèmes à résoudre pour ces dispositifs est le recyclage des billes dans le chemin de roulement. En effet, lorsque la vis tourne par rapport à l'écrou, les billes avancent dans leur chemin de roulement. Pour éviter que les billes ne sortent de l'espace entre la vis et l'écrou au cours du fonctionnement, elles sont ramenées à leur point de départ par un dispositif de recyclage après avoir parcouru un ou plusieurs tours successifs dans le chemin de roulement. Ce dispositif de recyclage incorpore une portion de trajectoire des billes complémentaire, nommée par la suite rainure de transfert, qui écarte les billes de leur chemin de roulement pour les contraindre à circuler au-dessus du diamètre extérieur de la vis et rejoindre ensuite le chemin de roulement dans une trajectoire cyclique, leur évitant de s'échapper de leur emprise entre la vis et l'écrou. La rainure de transfert prend la forme d'un canal pour guider la trajectoire des billes, ce canal pouvant être de forme tubulaire et entourer ainsi complètement les billes autour de leur trajectoire. Dans la rainure de transfert du dispositif de recyclage, les billes ne participent pas à la transmission de l'effort entre la vis et l'écrou. La trajectoire suivie par les billes au cours du fonctionnement du système vis-écrou est ainsi une trajectoire fermée constituée d'un chemin de roulement hélicoïdal à un ou plusieurs tours et complété par la rainure de transfert du dispositif de recyclage. Plusieurs chemins de roulement peuvent ainsi être définis dans un même système vis-écrou à billes, nécessitant le même nombre de dispositifs de recyclage.

Les nouvelles générations de systèmes vis-écrou à billes privilégient les dispositifs de recyclage sur un tour, limitant ainsi le nombre de billes qui ne contribuent pas à l'effort transmis entre la vis et l'écrou mais aussi la complexité de réalisation de la rainure de transfert complémentaire à chaque chemin de roulement et, par là même, le coût du dispositif. Ces systèmes de vis-écrou à billes, et à recyclage sur un tour, limitent aussi le risque de défaillance par blocage des billes dans le dispositif de recyclage. En effet, les dispositifs de recyclage sur plusieurs tours comportent des rainures de transfert longues et complexes à réaliser, en incorporant par exemple des parties tubulaires, pour transporter les billes au-dessus des tours intermédiaires du chemin de roulement des billes afin de ne pas perturber leur circulation dans le chemin de roulement constitué par ces tours intermédiaires. Or, ces conduits peuvent être facilement obstrués par des poussières ou débris transportés par les billes et agglomérés avec des lubrifiants éventuels présents dans le système vis-écrou.

Les dispositifs de recyclage comportent généralement des inserts de recirculation en matière plastique ou en alliage métallique à faible frottement et positionnés dans un logement réalisé dans l'écrou entre sa surface externe et sa surface interne. Ces inserts de recirculation intègrent chacun une rainure de transfert à une première extrémité située au niveau des filets de l'écrou pour compléter le chemin de roulement des billes.

Le principal problème réside alors dans la fixation des inserts constituant le dispositif de recyclage. Il existe deux catégories de dispositifs de recyclage répondant à ce problème : les dispositifs de recyclage à assemblage par l'intérieur de l'écrou et les dispositifs de recyclage à assemblage par l'extérieur de l'écrou.

Un dispositif de recyclage à assemblage par l'intérieur, est décrit, par exemple, par le document FR2703122. L'insert de recirculation de ce dispositif de recyclage est positionné dans son logement par l'intérieur de l'écrou. Il dispose de deux pattes venant se loger de part et d'autre de son logement lorsqu'elles rentrent dans le chemin de roulement au contact de l'écrou, lesdites pattes assurant dans cette position le bon fonctionnement de la rainure de transfert en continuité avec le chemin de roulement des billes par le verrouillage de l'orientation et du positionnement axial de l'insert de recirculation. Une difficulté susceptible d'être rencontrée avec un tel dispositif de recyclage est toutefois liée à l'assemblage des pièces, en particulier pour des écrous de petit diamètre et de grande longueur. En effet, il faut que chaque insert de recirculation accompagné de son outillage de positionnement puisse pénétrer dans le trou fileté de l'écrou avant d'être positionné face à son logement pour y être inséré avec une orientation précise. Cette opération nécessite des outillages complexes, et peut se révéler impossible, dès lors que le diamètre du trou fileté est de petite dimension, par exemple inférieur à la taille d'un doigt.

Un dispositif de recyclage à assemblage par l'extérieur, est décrit, par exemple, dans le document FR2045496. Il ne présente pas les difficultés de montage mentionnées ci-dessus. Toutefois, la réalisation ici de logements dans l'écrou de forme elliptique pour figer l'orientation de la rainure de transfert est délicate et onéreuse à réaliser.

Un dispositif de recyclage d'assemblage par l'extérieur est encore décrit dans le document EP0957294. Ce dispositif requiert toutefois un outil particulier pour introduire les inserts de recirculation et ces derniers ne sont pas maintenus par l'extérieur de l'écrou pour compenser les efforts générés dans l'axe du logement sur l'insert de recirculation tors du passage des billes dans la rainure de transfert. En cas de charge importante supportée par le système vis-écrou, les billes génèrent des efforts toujours plus importants dans cet axe. Si ces efforts sont insuffisamment repris par la taille des pattes, celle-ci risquent de se désengager de leur logement ou de générer des déformations de la rainure de transfert pénalisant le rendement du système vis-écrou. La dimension des pattes est limitée de plus par la méthode de mise en place de l'insert, limitant de fait l'effort de maintien supportable par l'insert dans son logement.

Ainsi, dans ces systèmes de vis-écrou à billes, les inserts de recirculation sont en général maintenus dans le logement de l'écrou par des moyens tels qu'une colle, une vis de blocage, un anneau élastique, ou autre et verrouillent l'orientation de la rainure de transfert par des formes combinées complexes de l'insert de recirculation combinées à la forme complémentaire de son logement. Ces moyens augmentent la complexité de réalisation à la fois des logements de l'écrou mais aussi celle des inserts de recirculation et de leur dispositif de maintien.

On connait également, par le document JP2014 156902A, un mécanisme de vis-écrou à billes selon le préambule de la revendication 1 comprenant des inserts de recirculation reçus dans des logements qui ne sont pas cylindriques.

### Exposé de l'invention

L'invention vise à obtenir les avantages des différentes solutions présentées ci-dessus, tout en simplifiant l'usinage de l'écrou et en diminuant le temps de montage de l'ensemble vis-écrou. L'invention vise également à garantir un maintien et une orientation simple et précise de chaque rainure de transfert même en cas de charge importante transmise par le système vis-écrou et sans dégradation notable du rendement dudit système.

Pour atteindre ces buts l'invention propose un mécanisme de vis et écrou à billes comprenant :
une vis et un écrou à filets, l'écrou coopérant avec la vis par l'intermédiaire de billes pouvant circuler dans un chemin de roulement formé par les filets de la vis et de l'écrou en regard, l'écrou étant en outre pourvu d'au moins un insert de recirculation inséré depuis une face externe de l'écrou, dans au moins un logement, traversant l'écrou de la face externe de l'écrou jusqu'au filet de l'écrou, l'insert de recirculation présentant une première extrémité avec une rainure de transfert de billes tournée vers la vis.

Par ailleurs
- le mécanisme comprend un corps de maintien de l'insert de recirculation, configuré pour maintenir l'insert de recirculation dans le logement de l'écrou. Le corps de maintien a pour fonction principale de maintenir l'insert de recirculation dans son logement. Le corps de maintien est, par exemple, une pièce supplémentaire du mécanisme qui enveloppe et supporte l'écrou.
- l'insert de recirculation présente une deuxième extrémité avec un épaulement d'appui sur une plage d'appui de l'écrou,
- la deuxième extrémité de l'insert de recirculation comprend un tenon d'orientation présentant une position angulaire prédéterminée et fixe par rapport à la rainure de transfert de billes.
- le tenon d'orientation coopère avec au moins un relief de guidage du corps de maintien.

Conformément à l'invention :
- le logement est cylindrique et
- en coopérant avec ledit au moins un relief de guidage du corps de maintien, le tenon d'orientation fixe une orientation de l'insert de recirculation dans le logement cylindrique, de manière que la rainure de transfert soit ajustée au chemin de roulement.

Le mécanisme de vis-écrou à billes peut comporter en particulier une pluralité d'inserts de recirculation reçus respectivement dans une pluralité de logements cylindriques.

La vis du mécanisme de vis-écrou à billes peut présenter un filet hélicoïdal sous la forme d'une gorge ou d'une rainure à profil circulaire ou gothique. Au filet de la vis correspond un filet interne de l'écrou, qui lui fait face. Les deux filets présentent préférentiellement le même profil et ont un pas identique. Ils constituent un chemin de roulement qui reçoit une pluralité de billes. Les billes sont capables de circuler, quasiment sans frottement, dans le chemin de roulement, lors de la rotation relative entre la vis et l'écrou. Comme indiqué dans la partie introductive, les billes transmettent dans ce chemin de roulement les efforts du mouvement entre la vis et l'écrou.

La première extrémité de chaque insert de recirculation présente une rainure de transfert des billes modifiant localement la trajectoire de ces dernières. La rainure de transfert fait circuler les billes au-dessus du filet de la vis pour les ramener en amont du chemin de roulement. Ceci définit une trajectoire cyclique des billes. L'insert peut être adapté à la recirculation sur plusieurs tours du chemin à billes. De préférence la recirculation est toutefois faite sur un seul tour.

Le bon fonctionnement de la recirculation des billes requiert un positionnement précis en hauteur de l'insert. Il requiert également une orientation précise de l'insert de recirculation dans son logement de sorte que la rainure de transfert puisse accompagner les billes dans leur changement de trajectoire depuis le chemin de roulement, avec le minimum de contraintes. L'insert de recirculation a en effet un rôle d'extraction des billes du chemin de roulement au niveau d'une première extrémité de la rainure de transfert. L'insert de recirculation force les billes à se dégager du chemin de roulement et à passer au-dessus du filet de la vis, à travers la rainure de transfert. Les billes rejoignent le chemin de roulement au niveau de la deuxième extrémité de la rainure de transfert et en arrière de l'endroit de leur extraction. Les billes parcourent ainsi de façon cyclique le chemin de roulement et la rainure de transfert tant que le mouvement relatif entre la vis et l'écrou ne s'inverse pas. En cas d'inversion du sens du mouvement relatif, par exemple dans le cas d'une inversion du sens de rotation de la vis, les billes parcourent le trajet cyclique en sens inverse. L'extrémité de sortie de la rainure de transfert devient alors l'extrémité d'entrée qui extrait les billes du chemin de roulement. Lors de leur trajet, les billes exercent sur l'insert de recirculation des efforts, orientés dans l'alignement du chemin de roulement, et notamment quand elles arrivent contre la première extrémité de la rainure de transfert, c'est-à-dire l'extrémité d'entrée. Les billes exercent aussi des efforts radiaux sur l'insert dans son logement, de l'intérieur de l'écrou vers l'extérieur de l'écrou.

Les efforts radiaux sont transmis au corps de maintien des inserts de recirculation. Celui-ci empêche en effet les inserts de recirculation de ressortir de leur logement vers l'extérieur de l'écrou.

Le chemin de roulement de chaque bille peut comprendre un ou plusieurs tours, un chemin de roulement sur un tour unique étant toutefois préféré. Ainsi l'écrou peut comporter de préférence une pluralité d'inserts de recirculation, reçus dans autant de logements. Le nombre d'inserts de recirculation est adapté à la longueur de l'écrou et au nombre de billes nécessaires au bon fonctionnement de l'ensemble vis-écrou.

Les inserts de recirculation et leurs logements sont de préférence à répartition angulaire uniforme autour de l'écrou pour répartir de manière symétrique les efforts des billes lors du passage dans les rainures de transfert. Ainsi, le corps de maintien peut comporter également une pluralité de reliefs de guidage, à répartition angulaire uniforme, coopérant avec une pluralité de tenons d'orientation des inserts de recirculation.

Dans une telle configuration, les inserts de recirculation peuvent être espacés axialement respectivement d'une distance correspondant à un tour de bille dans le chemin de roulement ou à un multiple du nombre de tours de billes.

Le positionnement en hauteur de chaque insert de recirculation est assuré par son épaulement qui vient en appui sur une plage d'appui de l'écrou. L'épaulement peut être formé par le tenon d'orientation, qui fait alors radialement saillie par rapport au corps de l'insert. L'épaulement peut aussi être distinct du tenon d'orientation.

La plage d'appui pour l'épaulement peut être simplement la face externe de l'écrou. Il peut s'agir aussi d'une plage d'appui au fond d'une dépression pratiquée dans l'écrou autour du logement pour l'insert. Ainsi, le positionnement en hauteur de l'insert est indexé par rapport à la face externe de l'écrou ou par rapport au fond de la dépression. La hauteur de l'insert dans son logement et la longueur du corps de l'insert permettent ainsi de fixer précisément la position radiale de la rainure de transfert par rapport au chemin de roulement, et en particulier par rapport au filet de l'écrou.

Il convient à cet égard de noter que le logement, qui s'étend de la face externe de l'écrou jusqu'au filet de l'écrou, est de préférence un logement radial, pour des raisons de facilité d'usinage. La dépression formée autour du logement peut être un lamage s'étendant dans l'épaisseur de l'écrou et recevant l'épaulement de l'insert. Il permet de limiter ou d'éviter le dépassement de l'insert par rapport à l'écrou, hormis le tenon.

Comme évoqué ci-dessus, l'orientation de la rainure de transfert par rapport au chemin de roulement des billes est fixée par le tenon d'orientation en coopération avec le relief de guidage associé du corps de maintien. Le corps de maintien, reçu sur une face externe de l'écrou, peut avantageusement comporter plusieurs reliefs de guidage coopérant avec plusieurs tenons d'orientation présents sur la face externe de l'écrou. En effet, et comme mentionné ci-dessus, le mécanisme comporte de préférence une pluralité d'inserts de recirculation, et chaque insert est pourvu d'un tenon d'orientation.

Le tenon d'orientation de l'insert est reçu, guidé et orienté par le relief du corps de maintien. Ceci permet par conséquent d'orienter l'insert de recirculation et sa rainure de transfert, grâce à la liberté de rotation de l'insert dans son logement. Le relief de guidage et le tenon présentent de préférence des formes complémentaires. Par exemple, le relief peut se présenter sous la forme d'une ou plusieurs nervures sur lesquelles peut coulisser une empreinte complémentaire du tenon d'orientation. A l'inverse, le tenon d'orientation peut aussi se présenter sous la forme d'un petit rail qui vient coulisser dans un relief du corps de maintien sous la forme d'une rainure de guidage en dépression. Le tenon d'orientation verrouille la rotation de l'insert de recirculation quand il est engagé dans la rainure ou la nervure correspondante du corps de maintien.

L'orientation du relief de guidage est fixe par rapport au corps de maintien, et la position du corps de maintien sur l'écrou est déterminée par la face externe de l'écrou qui reçoit le corps de maintien et sur laquelle le corps de maintien est ajusté. Par ailleurs, le tenon d'orientation et la rainure de transfert sont fixes sur l'insert de recirculation, et de préférence formés d'une seule pièce avec le corps de l'insert de recirculation. Ainsi l'orientation relative de la rainure de transfert peut être fixée en ajustant un ou plusieurs paramètres parmi l'orientation du relief de guidage, l'orientation du tenon par rapport au corps de l'insert et l'orientation de la rainure de transfert sur le corps de l'insert. Le relief de guidage du corps de maintien est de préférence choisi parallèle à l'axe de la vis et de l'écrou, pour des raisons de facilité d'assemblage.

L'orientation de la rainure de transfert est de préférence déterminée lors de la fabrication de l'insert. En effet, l'insert peut être fabriqué par moulage en métal ou en matière plastique. Ainsi la fixation de l'orientation relative de la rainure de transfert, et/ou de celle du tenon d'orientation, a lieu par moulage et est particulièrement aisée.

Le corps de maintien a aussi pour fonction de coopérer avec la face supérieure de l'insert de recirculation, qui peut être formée par la face supérieure du tenon d'orientation. En effet, et comme mentionné plus haut, le corps de maintien est en appui sur les inserts de recirculation pour éviter qu'ils ne sortent de leur logement sous l'effet des contraintes exercées par les billes. Ce maintien, conjugué à l'appui de l'épaulement sur l'écrou, garantit un positionnement en hauteur précis de l'insert de recirculation dans son logement et donc la hauteur de la rainure de transfert par rapport au chemin de roulement des billes et de la vis.

Lorsque l'épaulement de l'insert de recirculation est saillant sur la face externe de l'écrou, le corps de maintien peut aussi présenter des rainures ou des dépouilles autorisant le passage de la partie de l'épaulement qui est saillante.

Selon un mode de réalisation préféré, le tenon peut directement former l'épaulement. Il s'agit, par exemple, d'un rail qui fait saillie sur le corps de l'insert de recirculation, et dont la partie en saillie vient s'appuyer sur la face externe de l'écrou quand le corps de l'insert de recirculation est introduit dans son logement.

Bien que d'autres formes puissent être retenues, l'insert de recirculation présente de préférence un corps de forme générale cylindrique pouvant être introduit à jeu réduit dans le logement. L'insert présente une liberté de rotation dans le logement lorsque le tenon n'est pas engagé.

Selon une réalisation particulière de l'insert de recirculation, celui-ci peut encore présenter au moins une patte, et de préférence deux pattes symétriques ménagées au voisinage de la rainure de transfert de billes. Les pattes s'étendent dans le chemin de roulement en direction de la vis. Elles présentent chacune un bord d'arrêt formant un barrage à la circulation des billes dans le chemin de roulement, de sorte que les billes en mouvement dans le chemin de roulement viennent butter contre le bord d'arrêt. Ceci facilite leur extraction du chemin de roulement et leur acheminement vers la rainure de transfert. Les pattes constituent un prolongement des bords de la rainure de transfert.

Bien que les pattes s'étendent dans le chemin de roulement de manière suffisante pour recueillir les billes, elles sont de préférence conçues pour ne pas occuper totalement le chemin de roulement. Il est en effet préférable que les pattes ne viennent pas en contact avec la vis, de manière à éviter des frottements dégradant le rendement du système vis-écrou.

Lorsque les charges supportées par le mécanisme vis-écrou à billes sont importantes, les billes exercent également un effort important sur les bords d'arrêt des pattes. Afin de mieux contenir cet effort, les pattes peuvent présenter un contrefort opposé au bord d'arrêt des billes, le contrefort faisant radialement saillie sur le corps de l'insert de recirculation, et s'étendent dans le chemin de roulement.

L'extension dans le chemin de roulement permet d'augmenter le volume du contrefort et donc sa capacité de consolider la patte. Le contrefort, ou tout au moins la partie du contrefort qui s'étend dans le chemin de roulement est également conçu pour ne pas occuper entièrement le chemin de roulement de manière à ne pas générer de frottements et de manière à ne pas gêner l'orientation de l'insert de recirculation.

L'insert de recirculation peut comporter au moins un évidement ou une fente de rétractation radiale de la patte ou des pattes. On entend par rétractation radiale de la patte, un mouvement déplaçant la patte en direction de l'axe de l'insert de recirculation, de sorte que la patte, et en particulier le contrefort mentionné ci-dessus, ne constitue plus un obstacle à l'introduction de l'insert de recirculation dans son logement cylindrique. A cet effet, la patte peut être reliée au corps de l'insert de manière flexible avec une amplitude de flexion en direction de l'évidement de rétractation, égale ou légèrement supérieure à une longueur du contrefort en saillie, de manière à le rétracter entièrement.

La possibilité de rétractation radiale des pattes, et en particulier de leur contrefort en saillie, permet de faciliter l'introduction de l'insert de recirculation dans son logement cylindrique tout en maintenant un ajustement du corps de l'insert sur le diamètre du logement. Elle permet aussi de conserver la possibilité de rotation du corps de l'insert dans le logement avant que le tenon d'orientation ne vienne verrouiller la rotation. Le caractère flexible du lien entre la patte et le corps de l'insert permet aux contreforts de s'étendre automatiquement dans le chemin de roulement dès que l'insert de recirculation est en place.

L'évidement de rétractation est par exemple une fente bissectrice de l'insert, s'étendant, à partir de la première extrémité, c'est-à-dire l'extrémité portant la rainure de transfert, en direction de la deuxième extrémité portant le tenon. La fente de rétractation s'étend sur une partie de la hauteur de l'insert. Dans une réalisation particulière de l'insert, la fente de rétractation passe par la rainure de transfert et forme deux jambes symétriques qui portent chacune une patte. La hauteur de la fente détermine la longueur des jambes. Celle-ci est ajustée pour obtenir la flexibilité nécessaire à la rétractation des pattes. La fente de rétractation présente une largeur inférieure au diamètre des billes, pour éviter que des billes ne s'y accrochent ou ne s'y introduisent.

Des jambes de flexion peuvent être prévues pour relier les pattes au corps de l'insert de recirculation de manière à favoriser la rétractation radiale des pattes.

Dans une de ses applications principales, l'invention concerne un outil électrique portable tel qu'un sécateur ou une cisaille à tôle, comprenant une lame mobile, un moteur rotatif, une pièce mobile d'entrainement de la lame mobile, mue par le moteur, et un mécanisme de vis-écrou à billes tel que décrit. L'écrou du mécanisme vis-écrou à billes est relié à la pièce mobile d'entrainement de la lame et la vis est reliée au moteur. Le corps de maintien peut être une bague en matière plastique ou métallique ajustée sur l'écrou. Il peut être aussi constitué par un organe d'entrainement de l'écrou par un ensemble moteur ou motoréducteur, ou par un organe fixe lié à la structure de l'outil incorporant le système vis-écrou. Lorsque le corps de maintien est fixe ou lié à la structure de l'outil, l'écrou à bille peut être monté avec une possibilité de coulisser dans le corps de maintien lors du fonctionnement du système vis écrou. Dans ce cas, les tenons d'orientation peuvent être conçus pour coulisser également par rapport aux reliefs du corps de maintien.

La vis du mécanisme de vis-écrou à billes peut constituer une extension de l'arbre du moteur ou être relié à l'arbre du moteur par l'intermédiaire d'un réducteur ou d'un mécanisme d'accouplement approprié.

### Brève description des figures

Les buts, caractéristiques et avantages ci-dessus, et d'autres encore, ressortiront mieux de la description qui suit et des dessins dans lesquels :
La figure 1 est un éclaté d'un mécanisme de vis-écrou à billes conforme à l'invention.
La figure 2 est une représentation en perspective d'un corps de maintien du mécanisme de vis-écrou à billes de la figure 1.
La figure 3 est un écorché partiel montrant l'assemblage du mécanisme de vis-écrou à billes
La figure 4 est un éclaté du mécanisme de vis-écrou à billes.
La figure 5 est une coupe longitudinale de l'écrou de la figure 3 illustrant la recirculation des billes.
La figure 6 est une coupe longitudinale de l'écrou de la figure 3 pourvu de la vis du mécanisme de vis-écrou à billes.
La figure 7 est une coupe transversale d'une partie de l'écrou montrant un détail de la mise en place d'un insert de recirculation.
La figure 8 est une coupe transversale d'une partie du mécanisme de vis-écrou à billes autour d'un insert de recirculation.
La figure 9 est une coupe d'une partie du mécanisme de vis-écrou à billes passant par un contrefort d'un insert de recirculation.
La figure 10 est une perspective d'un insert de recirculation.
La figure 11 est une coupe partielle d'un sécateur électrique utilisant un mécanisme de vis-écrou à billes conforme à l'invention.

Description détaillée de modes de mise en oeuvre de l'invention.

On se reporte aux dessins pour décrire un exemple intéressant, bien que nullement limitatif, de réalisation d'un mécanisme de vis-écrou à billes conforme à l'invention.

Des parties identiques ou similaires des différentes figures sont repérés avec les mêmes signes de référence de sorte que l'on puisse se reporter d'une figure à l'autre. Les différentes figures sont représentées en échelle libre.

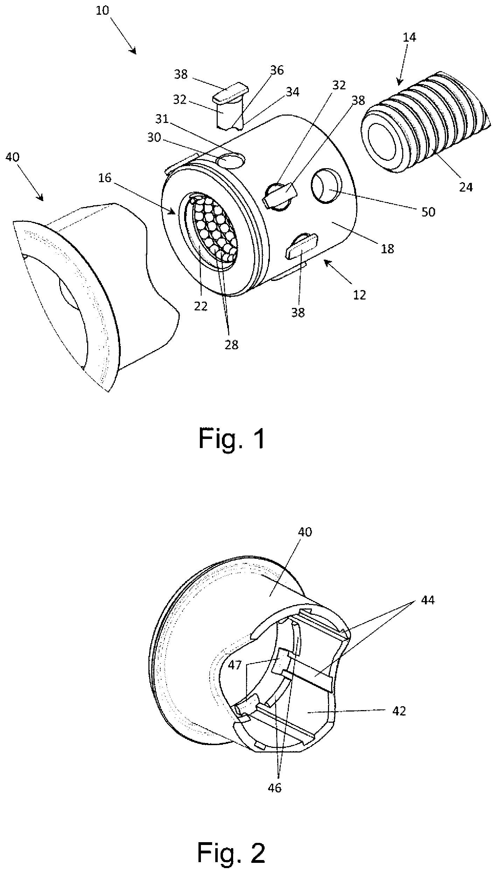

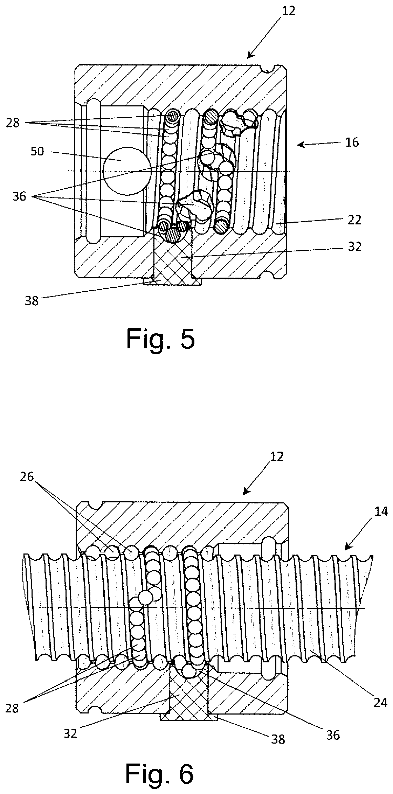

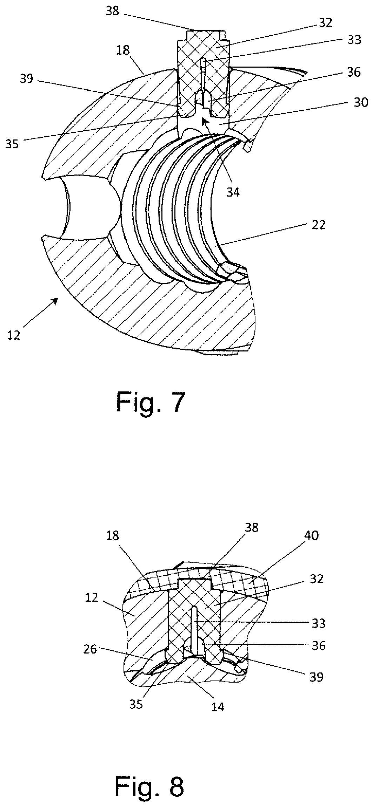

Le mécanisme vis-écrou à billes 10 de la figure 1 comprend un écrou 12, reçu sur une vis 14. L'écrou et la vis sont de préférence métalliques. Lorsque la vis et l'écrou sont assemblés, la vis passe dans un trou taraudé 16 de l'écrou 12 pourvu d'un filet intérieur 22. Le filet intérieur de l'écrou 12 est mieux visible sur les figures 5 et 7. Le pas du filet intérieur 22 de l'écrou correspond au pas d'un filet 24 pratiqué sur la vis. Lorsque l'écrou 12 et la vis 14 sont assemblés, les filets 22 et 24 de l'écrou et de la vis sont mutuellement en regard et forment un chemin de roulement 26, visible sur les figures 6, 8 et 9. Le chemin de roulement 26 reçoit une pluralité de billes 28. Les billes 28, dont le diamètre est adapté à celui des filets, maintiennent l'écrou dans une position concentrique sur la vis, lorsque la vis et l'écrou sont assemblés. Ils transmettent les efforts du mouvement de la vis vers l'écrou, et réciproquement. Les billes sont de préférence en acier. La rotation de la vis 14 peut être horaire ou antihoraire, provoquant respectivement une translation de l'écrou 12 dans un sens ou l'autre le long de l'axe de la vis.

Dans le mode de réalisation illustré, l'écrou présente une surface externe cylindrique 18. Il est noté que la surface externe n'est pas nécessairement cylindrique. L'écrou peut en effet présenter d'autres formes, par exemple une forme hexagonale.

Une pluralité de logements 30, sous la forme d'alésages radiaux, sont pratiqués dans l'écrou 12, avec une répartition angulaire uniforme. Les alésages présentent un chanfrein 31. Les logements 30 traversent l'écrou depuis la face externe 18 jusqu'au filet intérieur 22.

Chaque logement 30 est destiné à recevoir un insert de recirculation 32. Comme le montrent les figures 1, 7 et 10 et dans l'exemple particulier décrit, les inserts 32 présentent une forme générale cylindrique avec une première extrémité 34, tournée vers la vis 14, et pourvue d'une rainure de transfert 36. Une deuxième extrémité, opposée à la première extrémité, est pourvue d'un tenon d'orientation 38. L'insert de circulation, et le tenon d'orientation, formés de préférence d'une seule pièce, peuvent être en métal ou en matière plastique. La figure 8 montre que l'insert de recirculation est reçu à jeu réduit dans son logement.

Les figures 1, 3, 4, 5 et 6 montrent que le tenon d'orientation 38 forme un épaulement qui vient prendre appui sur une plage d'appui de l'écrou, Dans l'exemple illustré par les figures 1 à 6, la plage d'appui est formée par la face externe 18 de l'écrou. L'appui de l'épaulement permet de fixer l'extension de l'insert de recirculation dans les logements 30. Comme le montrent encore les figures 5 à 8, la longueur des inserts de recirculation est fixée de manière que la rainure de transfert 36 vienne se connecter au chemin de roulement 26 des billes lorsque l'épaulement formé par le tenon 38 est en appui sur la plage d'appui de l'écrou.

Une rainure de transfert 36 des inserts de recirculation est mieux visible sur la figure 5 qui illustre la recirculation des billes 28. La figure 5 est une coupe de l'écrou 12 dans laquelle on a retiré la vis. Elle montre en particulier les extrémités de quatre inserts de recirculation en position dans l'écrou. Dans un souci de clarté la vis est retirée et les billes ne sont représentées que pour deux trajets de billes dans le chemin de roulement. On peut observer que les billes 28 passent par la rainure de transfert 36 des inserts de recirculation d'un rang du chemin de roulement 26, ou d'un rang du filet 22 de l'écrou, au rang suivant ou précédant, selon le sens de rotation.

La recirculation des billes est aussi illustrée par la figure 6 qui est une coupe de l'écrou 12 dans lequel passe la vis 14 non coupée. On peut observer que les billes parcourent un trajet le long d'un chemin de roulement 26 qui va respectivement d'un rang des filets de la vis et de l'écrou au rang suivant. Les billes 28 sont ensuite extraites du chemin de roulement par l'insert de recirculation et passent dans la rainure de transfert 36 de l'insert de recirculation, au-dessus du filet 24 de la vis 14. Les billes sont enfin réintroduites dans le chemin de roulement 26 au rang précédent ou suivant du filet, selon le sens de rotation. Les deux trajets de billes représentés utilisent un premier insert de recirculation en amont du plan de coupe qui n'est pas représenté, et un deuxième insert de recirculation positionné dans le plan de coupe. Les billes ne sont pas représentées dans les autres trajets par souci de clarté.

Par retour à la figure 1, on peut noter que le mécanisme de vis-écrou à billes présente un corps de maintien 40, de préférence en matière plastique, destiné à coiffer l'écrou 12. Le corps de maintien se présente plus précisément comme un manchon qui vient en contact avec la face externe 18 de l'écrou. Dans l'exemple illustré, où l'écrou 12 est de forme générale cylindrique, le corps de maintien présente également un alésage de forme générale cylindrique, avec un diamètre ajusté à celui de l'écrou. D'autres formes complémentaires de l'écrou et du corps de maintien peuvent être envisagés.

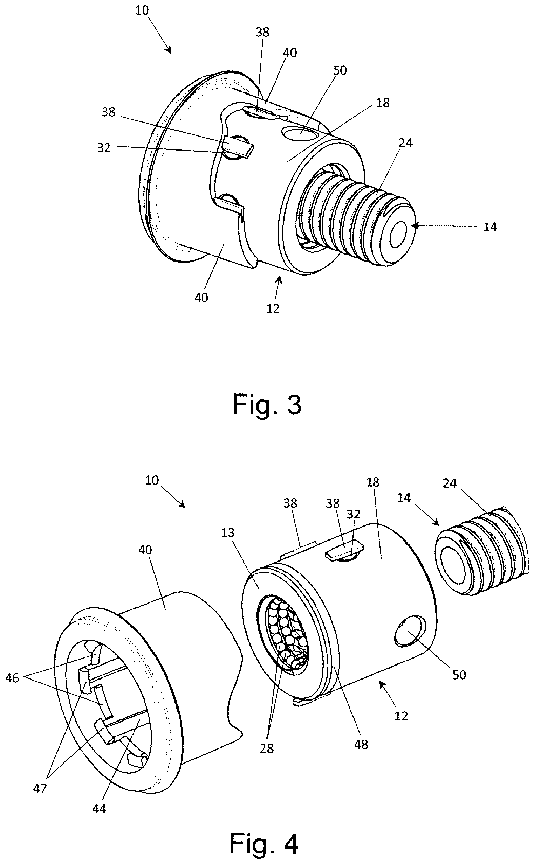

Comme le montre la figure 3, une fonction essentielle du corps de maintien, est de maintenir les inserts de recirculation 32 dans leurs logements. Le corps de maintien vient en effet en appui sur les inserts de recirculation 32 de manière à presser leur épaulement contre l'écrou.

La figure 2 montre que la face interne de l'alésage 42 du corps de maintien 40 présente des reliefs de guidage 44. Il s'agit, dans l'exemple illustré, de rainures qui s'étendent parallèlement à l'axe de l'alésage.

Le relief de guidage 44 présente une forme complémentaire des tenons d'orientation 38. Dans l'exemple illustré, les tenons d'orientation présentent une forme oblongue, et les rainures du relief de guidage ont une largeur correspondant à celle des tenons.

La figure 3 montre le mécanisme de la figure 1 assemblé. L'écrou 12 est inséré dans le corps de maintien 40. On peut observer que les tenons d'orientation 38, sont reçus et orientés dans les rainures du relief de guidage 44. Ceci correspond à la deuxième fonction du corps de maintien qui est de fixer et maintenir l'orientation des inserts de recirculation. L'orientation précise des inserts de recirculation est essentielle car elle permet d'ajuster l'orientation de la rainure de transfert par rapport au chemin de billes. Un relief de guidage peut être prévu pour chaque insert de recirculation. Il est également possible de prévoir qu'un même relief de guidage coopère avec les tenons de plusieurs inserts de recirculation alignés selon l'axe de l'écrou. On peut observer sur les figures 1 et 4 que les tenons d'orientation 38 présentent une extrémité légèrement effilée. Ceci permet de repérer sommairement l'orientation des inserts de recirculation au moment de leur mise en place dans leurs logements. De plus, l'extrémité légèrement effilée facilite l'introduction des tenons dans le relief de guidage 44 au moment de l'assemblage. Lorsque les tenons d'orientation viennent en prise sur le relief de guidage, l'orientation des inserts s'ajuste automatiquement sur le relief de guidage grâce à la liberté de rotation des inserts de recirculation 32 dans leurs logements 30. En revanche, dès que les tenons d'orientation 38 sont en prise avec le relief de guidage, la rotation des inserts est verrouillée.

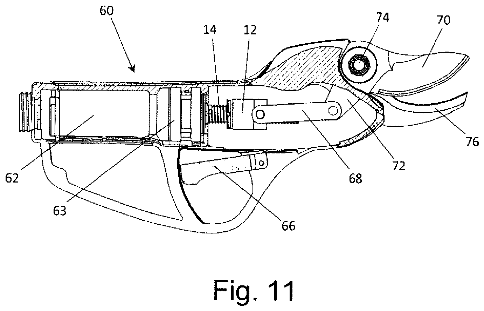

Les figures 1, 3, 4 et 5 montrent encore un alésage de fixation 50 sur l'écrou 12. L'alésage 50, radial, traverse l'écrou de part en part et n'est pas recouvert par le corps de maintien 40. L'alésage 50 est prévu pour recevoir des goujons de fixation de biellettes décrites plus loin en référence à la figure 11.

La figure 4, montre le mécanisme de vis-écrou à billes, juste avant l'assemblage du corps de maintien 40 sur l'écrou 12. Tous les inserts de recirculation 32 sont en place dans leurs logements. Le corps de maintien 40 présente un jonc interne segmenté dont les segments 46 viennent en prise dans une gorge circulaire 48, prévue sur la face externe 18 de l'écrou 12, pour maintenir le manchon sur l'écrou. Le corps de maintien 40 présente également un épaulement segmenté 47 qui vient en butée sur une face 13 de l'écrou voisine de la gorge 48.

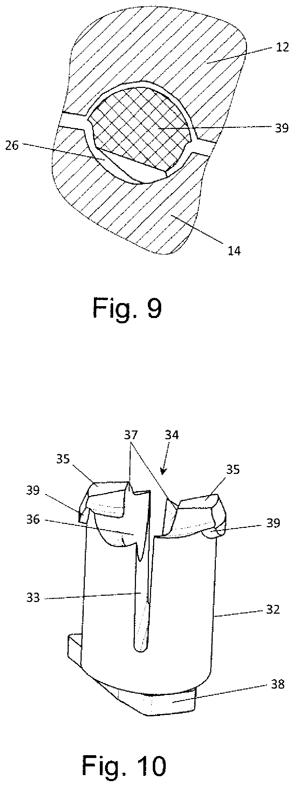

La figure 10 montre à plus grande échelle un insert de recirculation 32 de forme générale cylindrique. On peut notamment observer la rainure de transfert 36 sur la première extrémité 34 de l'insert, et le tenon d'orientation 38 sur l'extrémité opposée. Dans la réalisation particulière de l'insert de recirculation illustré par la figure 10, la rainure de transfert est prolongée par des pattes 35. Les pattes 35 sont destinées à faire saillie dans le chemin de roulement des billes de manière à arrêter les billes en circulation et les forcer à quitter le chemin de roulement pour poursuivre leur trajet dans la rainure de transfert 36. A cet effet, les pattes présentent chacune un bord d'arrêt des billes indiqué avec la référence 37.

Les bords d'arrêt de billes 37 et les pattes 35 sont susceptible d'être soumises à des contraintes importantes. Aussi l'insert 32 présente dans ce cas des contreforts 39 opposés aux bords d'arrêt 37.

Les contreforts 39 font saille radialement sur le corps cylindrique de l'insert de recirculation. Aussi pour éviter que les contreforts 39 n'entravent la mise en place de l'insert de recirculation dans son logement, l'insert est pourvu d'un évidement de rétractation 33. Il s'agit d'une fente longitudinale qui débouche dans le chemin de roulement. La largeur de la fente est à la fois suffisamment large pour permettre la rétractation radiale complète des contreforts et suffisamment réduite pour que les billes ne s'y introduisent pas. La fente formant l'évidement de rétractation 33 sépare l'extrémité de l'insert en deux parties qui constituent des jambes de flexion.

La rétractation des contreforts 39 par la flexion de jambes mentionnées ci-dessus est illustrée par la figure 7. La figure 7 montre, en coupe un insert de recirculation 32 au moment de son introduction dans son logement 30.

Lorsque l'insert de recirculation est entièrement introduit, c'est-à-dire lorsque l'épaulement formé par le tenon d'orientation 38 vient en appui contre la face externe 18 de l'écrou 12, la flexion des jambes est relâchée et les contreforts viennent se loger dans le chemin de roulement 26. On peut observer la position de l'insert de recirculation 32 et des contreforts 39 sur la figure 8. La figure 8 montre en coupe un détail de l'écrou et de la vis au voisinage d'un insert de recircuiation, après sa mise en place dans son logement.

Les contreforts occupent une partie importante de la section du chemin de roulement. Toutefois, les contreforts sont dimensionnés et maintenus de manière à ne toucher ni la vis 14 ni l'écrou 12. Un léger jeu est préservé de manière à éviter tout frottement inutile. Cet aspect est illustré par la figure 9, qui est une coupe du chemin de roulement passant par l'un des contreforts 39.

Le mécanisme de vis-écrou à bille peut être utilisé pour diverses applications. Une application particulière est représentée à la figure 11. Il s'agit d'une application à un sécateur électrique 60.

Le sécateur est pourvu d'un moteur électrique rotatif 62, et un mécanisme de vis-écrou à billes conforme à l'invention pour transformer le mouvement de rotation du moteur en un mouvement de translation. Le moteur 62 relié à la vis 14 du mécanisme de vis-écrou à billes par l'intermédiaire d'un réducteur 63 de manière à faire tourner la vis 14 dans un sens horaire ou antihoraire, en fonction d'une commande exercée sur une gâchette 66.

Comme décrit précédemment, la rotation de la vis 14 provoque le déplacement de l'écrou 12 parallèlement à l'axe de la vis. Le sens de déplacement de l'écrou dépend du sens de rotation de la vis. Une pièce mobile d'entrainement 68, par exemple une pièce à biellettes, est reliée à l'écrou au moyen d'une fixation appropriée, par exemple des gougeons ou des pivots, qui viennent en prise dans l'alésage de fixation 50 mentionné en référence aux figures 1, 3, 4 et 5.

L'extrémité opposée de la pièce mobile d'entrainement est reliée à une came 72 d'une lame mobile 70. Ainsi, le mouvement de translation de l'écrou 12 est transmis à la came et occasionne le pivotement de la lame mobile 70 autour d'un pivot 74. Selon le sens de rotation de la vis 14, la lame mobile 70 est soulevée, ou refermée sur une lame fixe 76.

## Revendications

1. Mécanisme de vis et écrou à billes comprenant une vis (14) et un écrou (12) à filets, l'écrou coopérant avec la vis (14) par l'intermédiaire de billes (28) pouvant circuler dans un chemin de roulement (26) formé par les filets (22, 24) de la vis et de l'écrou en regard, l'écrou étant en outre pourvu d'au moins un insert (32) de recirculation inséré depuis une face externe (18) de l'écrou, dans au moins un logement (30) traversant l'écrou de la face externe (18) de l'écrou (12) jusqu'au filet (22) de l'écrou, l'insert de recirculation (32) présentant une première extrémité (34) avec une rainure (36) de transfert de billes tournée vers la vis (14), dans lequel
- le mécanisme comprend un corps de maintien (40) de l'insert de recirculation (32), configuré pour maintenir l'insert de recirculation dans le logement,
- l'insert de recirculation (32) présente une deuxième extrémité avec un épaulement d'appui sur une plage d'appui de l'écrou (12),
- la deuxième extrémité de l'insert de recirculation (32) comprend un tenon d'orientation (38) présentant une position angulaire prédéterminée et fixe par rapport à la rainure (36) de transfert de billes,
- le tenon d'orientation coopère avec au moins un relief de guidage (44) du corps de maintien,
**caractérisé en ce que**:
- le logement est cylindrique et
- en coopérant avec ledit au moins un relief de guidage (44) du corps de maintien (40), le tenon d'orientation (38) fixe une orientation de l'insert de recirculation (32) dans le logement cylindrique, de manière que la rainure de transfert (36) soit ajustée au chemin de roulement.

2. Mécanisme selon la revendication 1, dans lequel le tenon d'orientation (38) forme l'épaulement d'appui de l'insert de recirculation (32).

3. Mécanisme selon l'une des revendications précédentes, dans lequel la plage d'appui est l'une parmi la face externe (18) de l'écrou et une plage d'appui dans une dépression formée autour du logement (30).

4. Mécanisme selon l'une des revendications précédentes, dans lequel le corps de maintien (40) présente un alésage (42) apte à recevoir l'écrou, et dans lequel au moins un relief de guidage (44) s'étend parallèlement à un axe de l'alésage (42).

5. Mécanisme selon l'une des revendications précédentes, dans lequel le relief de guidage (44) est une rainure en dépression.

6. Mécanisme selon l'une des revendications précédentes, comprenant une pluralité d'inserts (32) de recirculation de billes logés dans une pluralité correspondante de logements (30) pour inserts.

7. Mécanisme selon l'une des revendications précédentes, dans lequel le corps de maintien (40) comprend une pluralité de reliefs de guidage, à répartition angulaire uniforme, coopérant avec une pluralité de tenons d'orientation (38) d'une pluralité d'inserts de recirculation (32).

8. Mécanisme selon l'une des revendications précédentes, dans lequel chaque relief de guidage (44) est adapté à recevoir une pluralité de tenons d'orientation (38).

9. Mécanisme selon l'une des revendications précédentes, comportant une pluralité d'inserts de recirculation, les inserts étant répartis angulairement autour de l'écrou et étant espacés axialement respectivement d'une distance correspondant à des multiples d'un pas du filet (22) de l'écrou (12).

10. Mécanisme selon l'une des revendications 1 à 8, comportant une pluralité d'inserts de recirculation (32), les inserts étant répartis angulairement autour de l'écrou et étant espacés axialement respectivement d'une distance correspondant à un pas du filet (22) de l'écrou (12).

11. Mécanisme selon l'une des revendications précédentes dans lequel l'insert de recirculation présente au moins une patte (35), ménagée au voisinage de la rainure de transfert de billes, et s'étendant dans le chemin de roulement (26) en direction de la vis, la patte (35) présentant un bord (37) d'arrêt des billes.

12. Mécanisme selon la revendication 11, dans lequel la patte (35) présente un contrefort (39) opposé au bord d'arrêt (37), le contrefort faisant radialement saillie sur le corps de l'insert de recirculation, et s'étendant dans le chemin de roulement.

13. Mécanisme selon la revendication 12, dans lequel l'insert de recirculation présente un évidement (33) de rétractation radiale de la patte (35), la patte étant reliée au corps de l'insert de manière flexible avec une amplitude de flexion en direction de l'évidement de rétractation égale à une longueur du contrefort en saillie (39).

14. Outil électrique portable (60), choisi parmi les sécateurs et les cisailles, comprenant une lame mobile (70), un moteur rotatif (62) et une pièce mobile (68) d'entrainement de la lame mobile, mue par le moteur, et un mécanisme de vis-écrou à billes (10) conforme à l'une quelconque des revendication précédentes, l'écrou (12) du mécanisme vis-écrou à billes étant relié à la pièce mobile d'entrainement (68) de la lame et la vis (14) étant relié au moteur (62).

## Patentansprüche

1. Kugelgewindetriebmechanismus, umfassend eine Schraube (14) und eine Mutter (12) mit Gewinde, wobei die Mutter über Kugeln (28), die sich in einer durch das Gewinde (22, 24) der betreffenden Schraube und Mutter gebildeten Laufrille (26) bewegen können, mit der Schraube (14) zusammenwirkt, wobei die Mutter ferner mit mindestens einem Rückführeinsatz (32) versehen ist, der von einer Außenfläche (18) der Mutter in mindestens eine Aufnahme (30), die die Mutter von der Außenfläche (18) der Mutter (12) bis zum Gewinde (22) der Mutter durchquert, eingesetzt ist, wobei der Rückführeinsatz (32) ein erstes Ende (34) mit einer Nut (36) zur Überführung von Kugeln aufweist, die in Richtung der Schraube (14) gewandt ist, wobei
- der Mechanismus einen Haltekörper (40) zum Halten des Rückführeinsatzes (32) umfasst, der dazu ausgeführt ist, den Rückführeinsatz in der Aufnahme zu halten,
- der Rückführeinsatz (32) ein zweites Ende mit einer Stützschulter auf einem Stützbereich der Mutter (12) aufweist,
- das zweite Ende des Rückführeinsatzes (32) einen Ausrichtzapfen (38) umfasst, der eine vorab festgelegte und relativ zur Nut (36) zur Überführung von Kugeln feste Winkelposition aufweist,
- der Ausrichtzapfen mit mindestens einem Führungsrelief (44) des Haltekörpers zusammenwirkt,
**dadurch gekennzeichnet, dass**
- die Aufnahme zylindrisch ist und
- der Ausrichtzapfen (38) durch Zusammenwirken mit dem mindestens einen Führungsrelief (44) des Haltekörpers (40) eine Ausrichtung des Rückführeinsatzes (32) in der zylindrischen Aufnahme festlegt, sodass die Überführungsnut (36) an die Laufrille angepasst ist.

2. Mechanismus nach Anspruch 1, wobei der Ausrichtzapfen (38) die Stützschulter des Rückführeinsatzes (32) bildet.

3. Mechanismus nach einem der vorhergehenden Ansprüche, wobei der Stützbereich eines von der Außenfläche (18) der Mutter und einem Stützbereich in einer um die Aufnahme (30) gebildeten Vertiefung ist.

4. Mechanismus nach einem der vorhergehenden Ansprüche, wobei der Haltekörper (40) eine Bohrung (42) aufweist, die fähig ist, die Mutter aufzunehmen, und wobei sich mindestens ein Führungsrelief (44) parallel zu einer Bohrungsachse (42) erstreckt.

5. Mechanismus nach einem der vorhergehenden Ansprüche, wobei das Führungsrelief (44) eine eingelassene Nut ist.

6. Mechanismus nach einem der vorhergehenden Ansprüche, umfassend eine Vielzahl von Einsätzen (32) zur Rückführung von Kugeln, die in einer entsprechenden Vielzahl von Aufnahmen (30) für Einsätze aufgenommen ist.

7. Mechanismus nach einem der vorhergehenden Ansprüche, wobei der Haltekörper (40) eine Vielzahl von Führungsreliefs mit gleichmäßiger Winkelverteilung umfasst, die mit einer Vielzahl von Ausrichtzapfen (38) einer Vielzahl von Rückführeinsätzen (32) zusammenwirkt,

8. Mechanismus nach einem der vorhergehenden Ansprüche, wobei jedes Führungsrelief (44) dazu ausgelegt ist, eine Vielzahl von Ausrichtzapfen (38) aufzunehmen.

9. Mechanismus nach einem der vorhergehenden Ansprüche, umfassend eine Vielzahl von Rückführeinsätzen, wobei die Einsätze in Winkeln um die Mutter verteilt sind und axial jeweils um einen Abstand beabstandet sind, der Vielfachen einer Steigung des Gewindes (22) der Mutter (12) entspricht.

10. Mechanismus nach einem der Ansprüche 1 bis 8, umfassend eine Vielzahl von Rückführeinsätzen (32), wobei die Einsätze in Winkeln um die Mutter verteilt sind und axial jeweils um einen Abstand beabstandet sind, der einer Steigung des Gewindes (22) der Mutter (12) entspricht.

11. Mechanismus nach einem der vorhergehenden Ansprüche, wobei der Rückführeinsatz mindestens eine Klaue (35) aufweist, die benachbart zur Nut zur Überführung von Kugeln bereitgestellt ist und sich in die Laufrille (26) in Richtung der Schraube erstreckt, wobei die Klaue (35) eine Anschlagkante (37) für Kugeln aufweist.

12. Mechanismus nach Anspruch 11, wobei die Klaue (35) eine Strebe (39) gegenüber der Anschlagkante (37) aufweist, wobei die Strebe radial über den Körper des Rückführeinsatzes hinausragt und sich in die Laufrille erstreckt.

13. Mechanismus nach Anspruch 12, wobei der Rückführeinsatz eine Aussparung (33) zum radialen Einfahren der Klaue (35) aufweist, wobei die Klaue mit dem Körper des Einsatzes auf biegsame Weise verbunden ist, wobei eine Biegungsamplitude in Richtung der Einfahraussparung gleich einer Länge der hinausragenden Strebe (39) ist.

14. Tragbares elektrisches Werkzeug (60), ausgewählt aus Baumscheren und Handscheren, umfassend eine bewegliche Klinge (70), einen Umlaufmotor (62) und ein bewegliches Teil (68) zum Antreiben der beweglichen Klinge, das von dem Motor angetrieben wird, und einen Kugelgewindetriebmechanismus (10) nach einem der vorhergehenden Ansprüche, wobei die Mutter (12) des Kugelgewindetriebmechanismus mit dem beweglichen Teil zum Antreiben (68) der Klinge verbunden ist und die Schraube (14) mit dem Motor (62) verbunden ist.

## Claims

1. A ball screw and nut mechanism comprising a threaded screw (14) and a threaded nut (12), the nut cooperating with the screw (14) by way of balls (28) which can circulate in a raceway (26) formed by the threads (22,24) of the screw and the nut in facing relationship, the nut also being provided with at least one recirculation insert (32) inserted from an outside face (18) of the nut in at least one housing (30) passing through the nut from the outside face (18) of the nut (12) to the thread (22) of the nut, the recirculation insert (32) having a first end (34) with a bail transfer groove (36) turned towards the screw (14), in which
- the mechanism comprises a holding body (40) for the recirculation insert (32) adapted to hold the recirculation insert In the housing,
- the recirculation insert (32) has a second end with a support shoulder on a support face of the nut (12),
- the second end of the recirculation insert (32) comprises an orientation lug (38) which is in a predetermined angular position fixed with respect to the ball transfer groove (36),
- the orientation lug cooperates with at least one guide recess (44) of the holding body,
**characterised in that**:
- the housing is cylindrical and
- by cooperating with said at least one guide recess (44) of the holding body (40) the orientation lug (38) fixes an orientation of the recirculation insert (32) in the cylindrical housing such that the transfer groove (36) is adjusted to the raceway.

2. A mechanism according to claim 1 in which the orientation lug (38) forms the support shoulder of the recirculation insert (32).

3. A mechanism according to one of the preceding claims in which the support face is one of the outside face (18) of the nut and a support face in a depression formed around the housing (30).

4. A mechanism according to one of the preceding claims in which the holding body (40) has a bore (42) capable of receiving the nut and in which at least one guide recess (44) extends parallel to an axis of the bore (42).

5. A mechanism according to one of the preceding claims in which the guide recess (44) is a depressed groove.

6. A mechanism according to one of the preceding claims comprising a plurality of ball recirculation inserts (32) accommodated in a corresponding plurality of housings (30) for inserts.

7. A mechanism according to one of the preceding claims in which the holding body (40) comprises a plurality of guide recesses in uniform angularly distributed relationship and cooperating with a plurality of orientation lugs (38) of a plurality of recirculation inserts (32).

8. A mechanism according to one of the preceding claims in which each guide recess (44) is adapted to receive a plurality of orientation lugs (38).

9. A mechanism according to one of the preceding claims comprising a plurality of recirculation inserts, the inserts being angularly distributed around the nut and being axially spaced respectively by a distance corresponding to multiples of a flight of the thread (22) of the nut (12).

10. A mechanism according to one of claims 1 to 8 comprising a plurality of recirculation inserts (32), the inserts being angularly distributed around the nut and being spaced axially respectively by a distance corresponding to a flight of the thread (22) of the nut (12).

11. A mechanism according to one of the preceding claims in which the recirculation insert has at least one tab (35) disposed in the proximity of the ball transfer groove and extending into the raceway (26) in the direction of the screw, the tab (35) having an edge (37) for stopping the balls.

12. A mechanism according to claim 11 in which the tab (35) has a support (39) in opposite relationship to the stop edge (37), the support projecting radially on the body of the recirculation insert and extending into the raceway.

13. A mechanism according to claim 12 in which the recirculation insert has a cavity (33) for radial retraction of the tab (35), the tab being connected to the body of the insert flexibly with an amplitude of flexion in the direction of the retraction cavity equal to a length of the projecting support (39).

14. A handheld electric tool (60) selected from pruning shears and trimmers comprising a mobile blade (70), a rotary motor (62) and a mobile component for driving the mobile blade that is moved by the motor, and a ball screw and nut mechanism (10) according to any one of the preceding claims, the nut (12) of the ball screw and nut mechanism being connected to the moveable drive component (68) of the blade and the screw (14) being connected to the motor (62).
